# EUROPÄISCHE PATENTSCHRIFT

(11) **EP 1 311 580 B1**
(45) Veröffentlichungstag und Bekanntmachung des Hinweises auf die Patenterteilung: **28.06.2006**
(21) Anmeldenummer: 01969629.3
(22) Anmeldetag: 22.08.2001
(51) Int. Cl.: C08G 18/67, C08G 18/81, C08G 18/80, C09D 175/16

(54) **THERMISCH UND MIT AKTINISCHER STRAHLUNG HÄRTBARE EINKOMPONENTENSYSTEME UND IHRE VERWENDUNG**
SINGLE COMPONENT SYSTEM SETTING BY THERMAL MEANS OR BY ACTINIC IRRADIATION AND USE THEREOF
SYSTEMES A COMPOSANTE UNIQUE DURCISSABLE PAR REACTION THERMIQUE ET PAR RAYONNEMENT ACTINIQUE ET LEUR UTILISATION

(30) Priorität: 24.08.2000 DE 10041635
(43) Veröffentlichungstag der Anmeldung: 21.05.2003
(73) Patentinhaber: BASF Coatings Aktiengesellschaft, 48165 Münster (DE)
(72) Erfinder: BAUMGART, Hubert, 48163 Münster (DE); MEISENBURG, Uwe, 47051 Duisburg (DE); RÖCKRATH, Ulrike, 48308 Senden (DE)
(74) Vertreter: Fitzner, Uwe
(86) Internationale Anmeldenummer: PCT/EP2001/009697
(87) Internationale Veröffentlichungsnummer: WO 2002/016462

(56) Entgegenhaltungen:
- EP-A- 0 549 116
- EP-A- 0 928 800
- DE-A- 19 860 041

## Beschreibung

Die vorliegende Erfindung betrifft neue thermisch und mit aktinischer Strahlung härtbare Einkomponentensysteme. Außerdem betrifft die vorliegende Erfindung die Verwendung der neuen thermisch und mit aktinischer Strahlung härtbaren Einkomponentensysteme als Beschichtungsstoffe, Klebstoffe und Dichtungsmassen.

Im Rahmen der vorliegenden Erfindung ist unter aktinischer Strahlung elektromagnetische Strahlung wie nahes Infrarot (NIR), sichtbares Licht, UV-Strahlung und Röntgenstrahlung oder Korpuskularstrahlung wie Elektronenstrahlung zu verstehen.

Beschichtungsstoffe, Klebstoffe und Dichtungsmassen, die sowohl thermisch als auch mit aktinischer Strahlung härtbar sind (Dual-Cure-Beschichtungsstoffe, -Klebstoffe und -Dichtungsmassen), gewinnen immer mehr an Interesse, weil sie zahlreiche Vorteile bieten.

So sind Dual-Cure-Beschichtungsstoffe zum einem besser für die Beschichtung thermisch empfindlicher Substrate geeignet als Beschichtungsstoffe, die nur thermisch härtbar sind, da bei ihnen eine möglicherweise unvollständige thermische Härtung bei niedrigen Temperaturen durch die Härtung mit aktinischer Strahlung kompensiert werden kann, so daß insgesamt Beschichtungen mit guten anwendungstechnischen Eigenschaften resultieren. Zum anderen sind Dual-Cure-Beschichtungsstoffe besser für die Beschichtung komplex geformter dreidimensionaler Substrate geeignet als Beschichtungsstoffe, die nur mit aktinischer Strahlung härtbar sind, da eine unvollständige Strahlerthärtung in den Schattenbereichen der Substrate durch die thermische Härtung kompensiert werden kann, so daß auch hier insgesamt Beschichtungen mit guten anwendungstechnischen Eigenschaften resultieren.

Dies gilt mutatis mutandis auch für die Dual-Cure-Klebstoffe und - Dichtungsmassen.

Dual-Cure-Beschichtungsstoffe, die Beschichtungen liefern, die in ihrem dreidimensionalen Netzwerk Urethangruppen enthalten, sind bekannt.

Aus der europäischen Patentanmeldung EP 0 928 800 A 1 ist ein Dual-Cure-Beschichtungsstoff bekannt, der ein Urethan(meth)acrylat mit freien Isocyanatgruppen und (Meth)Acryloylgruppen, einen Photoinitiator und eine isocyanatreaktive Verbindung, insbesondere ein Polyol oder Polyamin, enthält. Dieser Dual-Cure-Beschichtungsstoff bietet die Möglichkeit, die Eigenschaftsprofile von Beschichtungsstoff und von Beschichtung zu variieren und gezielt an unterschiedliche Verwendungszwecke anzupassen.

Der Nachteil der bekannten Dual-Cure-Beschichtungsstoffe liegt darin, daß es sich um sogenannte Zweikomponentensysteme handelt, bei denen die Bestandteile, die freie Isocyanatgruppen enthalten, bis zur Applikation unter Ausschluß von Wasser bzw. getrennt von den Bestandteilen, die die isocyanatreaktiven Gruppen enthalten, gelagert werden müssen, um eine vorzeitige Vernetzung zu vermeiden. Dies erfordert aber einen höheren technischen und planerischen Aufwand bei der Lagerung, der Herstellung und der Applikation.

Dies gilt mutatis mutandis auch für die entsprechenden Dual-Cure-Klebstoffe und -Dichtungsmassen.

In der nicht vorveröffentlichten deutschen Patentanmeldung DE 199 08 018.6 wird eine thermisch und mit aktinischer Strahlung härtbare Pulverslurry beschrieben, die mindestens einen Bestandteil enthält, der funktionelle Gruppen, die die Slurry mit aktinischer Strahlung härtbar machen, und komplementäre reaktive funktionelle Gruppen, die Slurry thermisch härtbar machen, im molaren Verhältnis von 100 : 1 bis 1 : 00 aufweist. Als reaktive funktionelle Gruppen kommen unter anderem auch Urethangruppen und Harnstoffgruppen in Betracht. Indes werden als Vernetzungsmittel herkömmliche Vernetzungsmittel wie Tris(alkoxycarbonylamino)triazine, Aminoplastharze Anhydridgruppen enthaltende Verbindungen, Epoxidgruppen enthaltende Verbindungen, blockierte und/oder unblockierte Polyisocyanate, beta-Hydroxyalkylamide oder Addukte von Malonsäurederivaten an Polyisocyanate in Kombination mit aliphatischen Dicarbonsäuren verwendet. In der deutschen Patentanmeldung wird nicht beschrieben, daß diese Vernetzungsmittel auch noch der Härtung mit aktinischer Strahlung dienen sollen.

Aufgabe der vorliegende Erfindung ist es, ein Dual-Cure-Einkomponentensystem bereitzustellen, daß die Vorteile der bekannten Dual-Cure-Zweikomponentensysteme aufweist, ohne deren Nachteile zu haben.

Insbesondere sollen in den neuen Dual-Cure-Einkomponentensystemen Bindemittel und Vernetzungsmittel nebeneinander vorliegen, ohne vorzeitig zu vernetzen. Dabei sollen sie nach der Applikation unter dem Einfluß von Wärme und aktinischer Strahlung bei vergleichsweise tiefen Temperaturen rasch vernetzen, so daß sie auch für die Beschichtung, das Verkleben und das Abdichten thermisch empfindlicher Substrate geeignet sind. Die resultierenden neuen Beschichtungen, Klebschichten und Dichtungen sollen eine vorzügliche Witterungsbeständigkeit, Chemikalienbeständigkeit, Härte, Flexibilität und Kratzfestigkeit aufweisen, so daß sie insbesondere für die Automobilerstlackierung, Autoreparaturlackierung, die Möbellackierung sowie die industrielle Lackierung, inklusive Coil Coating, Container Coating und die Beschichtung elektrotechnischer Bauteile, sowie das Verkleben und das Abdichten der hierbei verwendeten Substrate in hohem Maße in Betracht kommen.

Demgemäß wurde das neue thermisch und mit aktinischer Strahlung härtbare Einkomponentensystem gefunden, das
(A) mindestens ein Vernetzungsmittel, enthaltend im statistischen Mittel mindestens eine blockierte Isocyanatgruppe und mindestens eine funktionelle Gruppe mit mindestens einer mit aktinischer Strahlung aktivierbaren Bindung im Molekül, und
(B) mindestens ein Bindemittel mit im statistischen Mittel mindestens einer isocyanatreaktiven funktionellen Gruppe
enthält und das im folgenden als "erfindungsgemäßes Einkomponentensystem" bezeichnet wird.

Weitere erfindungsgemäße Gegenstände ergeben sich aus der Beschreibung.

Der wesentliche Bestandteil des erfindungsgemäßen Einkomponentensystems ist mindestens ein Vernetzungsmittel (A), das sowohl an der thermischen Härtung als auch an der Härtung mit aktinischer Strahlung teilnimmt.

Das Vernetzungsmittel (A) enthält im statistischen Mittel mindestens eine, insbesondere mindestens zwei blockierte Isocyanatgruppen im Molekül.

Beispiele geeigneter Blockierungsmittel für Isocyanatgruppen sind
i) Phenole wie Phenol, Cresol, Xylenol, Nitrophenol, Chlorophenol, Ethylphenol, tert.-Butylphenol, Hydroxybenzoesäure, Ester dieser Säure oder 2,5- di tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thiohamstoff, Ethylenharnstoff, Ethylenthioharnstoff oder 1,3-Diphenyiharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazole, oder Triazole; sowie
xvii) Gemische dieser Blockierungsmittel, insbesondere Dimethylpyrazol und Triazole, Malonester und Acetessigsäureester oder Dimethylpyrazol und Succinimid.

Außerdem enthält das Vernetzungsmittels (A) im statistischen Mittel mindestens eine, insbesondere mindestens zwei, funktionelle Gruppen mit mindestens einer mit aktinischer Strahlung aktivierbaren Bindung im Molekül.

Beispiele geeigneter mit aktinischer Strahlung aktivierbarer Bindungen sind Kohlenstoff-Wasserstoff-Einzeibindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder - Doppelbindungen. Von diesen werden die Doppelbindungen, insbesondere die Kohlenstoff-Kohlenstoff-Doppelbindungen, bevorzugt angewandt.

Gut geeignete Kohlenstoff-Kohlenstoff-Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylatgruppen, von besonderem Vorteil und werden deshalb erfindungsgemäß ganz besonders bevorzugt verwendet.

Das Vernetzungsmittel (A) kann in beliebiger Weise hergestellt werden.

Erfindungsgemäß sind indes Vernetzungsmittel (A) von besonderem Vorteil, die aus mindestens einem Polyisocyanat mit einer Isocyanatfunktionalität von mindestens 2,0 hergestellt werden. Vorzugsweise hatte das Polyisocyanat eine Isocyanatfunktionalität von 2, 0 bis 6,0, bevorzugt 2,0 bis 5,0, besonders bevorzugt 2,0 bis 4,5 und insbesondere 2,0 bis 3,5. Im Hinblick auf die bessere Witterungsbeständigkeit und Vergilbungsbeständigkeit werden aliphatische und cycloaliphatische Polyisocyanate bevorzugt verwendet. Im Rahmen der vorliegenden Erfindung bezeichnet der Begriff "cycloaliphatisches Diisocyanat" ein Diisocyanat, worin mindestens eine Isocyanatgruppe an einen cycloaliphatischen Rest gebunden ist.

Beispiele geeigneter cycloaliphatischer Polyisocyanate mit einer Isocyanatfunktionalität von 2,0 sind Isophorondüsocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-lsocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan Dicyclohexylmethan-2,4'-diisocyanat oder Dicyclohexylmethan-4,4'-diisocyanat, insbesondere Isophorondiisocyanat.

Beispiele geeigneter erfindungsgemäß zu verwendender acyclischer aliphatischer Diisocyanate mit einer Isocyanatfunktionalität von 2,0 sind Trimethylendiisocyanat, Tetramethylendiisocyanat, Pentamethyfendüsocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan.

Von diesen ist Hexamethylendiisocyanat von besonderem Vorteil und wird deshalb erfindungsgemäß ganz besonders bevorzugt verwendet.

Beispiele geeigneter Polyisocyanate (A) mit einer Isocyanatfunktionalität >2 sind Polyisocyanate, insbesondere auf der Basis von Hexamethylendiisocyanat, die Isocyanurat-, Biuret-, Allophanat-, Iminooxadiazindion-, Urethan-, Harnstoff-, Carbodiimid- und/oder Uretdiongruppen aufweisen und die in üblicher und bekannter Weise aus den vorstehend beschriebenen Diisocyanaten erhältlich sind. Hiervon sind die allophanatgruppenhaltigen von Vorteil und werden deshalb erfindungsgemäß besonders bevorzugt verwendet. Beispiel geeigneter Herstellungsverfahren und Polyisocyanate sind aus den Patentschriften CA 2,163,591 A, US 4,419,513 A, US 4,454,317 A, EP 0 646 608 A 1, US 4,801,675 A, EP 0 183 976 A 1, DE 40 15 155 A 1, EP 0 303 150 A 1, EP 0 496 208 A 1, EP 0 524 500 A 1, EP 0 566 037 A 1; US 5,258,482 A, US 5,290,902 A, EP 0 649 806 A 1, DE 42 29 183 A 1 oder EP 0 531 820 A 1 bekannt.

Die vorstehend beschriebenen Polyisocyanate werden mit mindestens einer Verbindung umgesetzt, die mindestens eine, insbesondere eine, isocyanatreaktive funktionelle Gruppe und mindestens eine, insbesondere eine, mit aktinischer Strahlung aktivierbare Bindung enthält, umgesetzt.

Beispiele geeigneter isocyanatreaktiver funktioneller Gruppen sind Hydroxyl-, Thiol- und/oder primäre und/oder sekundäre Aminogruppen, insbesondere Hydroxylgruppen.

Beispiele geeigneter mit aktinischer Strahlung aktivierbarer Bindungen sind die vorstehend beschriebenen.

Beispiele geeigneter Verbindungen mit mindestens einer, insbesondere einer, isocyanatreaktiven funktionellen Gruppe sowie mindestens einer, insbesondere einer, mit aktinischer Strahlung aktivierbaren Bindung pro Molekül sind
- Allylalkohol oder 4-Butylvinylether;
- Hydroxyalkylester und Hydroxycycloalkylester der Acrylsäure oder der Methacrylsäure, insbesondere der Acrylsäure, die durch Veresterung aliphatischer Diole, beispielsweise der vorstehend beschriebenen niedermolekularen Diole B), mit Acrylsäure oder Methacrylsäure oder durch Umsetzung von Acrylsäure oder Methacrylsäure mit einem Alkylenoxid erhältlich sind, insbesondere Hydroxyalkylester der Acrylsäure oder Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Bis(hydroxymethyl)cyclohexanacrylat oder - methacrylat; von diesen sind 2-Hydroxyethylacrylat und 4-Hydroxybutylacrylat besonders vorteilhaft und werden deshalb erfindungsgemäß besonders bevorzugt verwendet; oder
- Umsetzungsprodukte aus cyclischen Estern, wie z.B. epsilon-Caprolacton, und diesen Hydroxyalkyl- oder -cycloalkylestern.

Außerdem werden die Polyisocyanate mit mindestens einem der vorstehend beschriebenen Blockierungsmittel umgesetzt.

In einer ersten bevorzugten Variante erfolgt die Herstellung des Vernetzungsmittels (A) durch die Umsetzung der vorstehend beschriebenen Verbindungen mit den Polyisocyanaten in einem Molverhältnis, daß im statistischen Mittel noch mindestens eine freie Isocyanatgruppe im resultierenden Addukt verbleibt, die für die Umsetzung mit den vorstehend beschriebenen Blockierungsmitteln zur Verfügung steht.

In einer zweiten bevorzugten Variante erfolgt die Herstellung des Vernetzungsmittels (A) durch die Umsetzung der vorstehend beschriebenen Blockierungsmittel mit den Polyisocyanaten in einem Molverhältnis, daß im statistischen Mittel noch mindestens eine freie Isocyanatgruppe im Addukt verbleibt, die für die Umsetzung mit den vorstehend beschriebenen Verbindungen zur Verfügung steht.

In einer dritten bevorzugten Variante erfolgt die Herstellung des Vernetzungsmittels (A), indem man die vorstehend beschriebenen Verbindungen und die vorstehend beschriebenen Blockierungsmittel in einem Eintopfverfahren mit den Polyisocyanaten umsetzt.

Unabhängig davon, welche Variante für die Herstellung der Vernetzungsmittel (A) gewählt wird, sind hierin keine freien Isocyanatgruppen mehr vorhanden bzw. nicht mehr nachweisbar.

Der Gehalt des erfindungsgemäßen Einkomponentensystems an dem Vernetzungsmittel (A) kann breit variieren und richtet sich vor allem nach der Funktionalität des Vernetzungsmittels (A) einerseits und der Funktionalität des Bindemittels (B) andererseits. Vorzugsweise enthält das erfindungsgemäße Einkomponentensystem, bezogen auf seinen Festkörper, 10 bis 80, bevorzugt 15 bis 75, besonders bevorzugt 20 bis 70, ganz besonders bevorzugt 25 bis 65 und insbesondere 30 bis 60 Gew.-%.

Der weitere wesentliche Bestandteil des erfindungsgemäßen Einkomponentensystems ist mindestens ein Bindemittel (B) mit im statistischen Mittel mindestens einer, insbesondere mindestens zwei, isocyanatreaktiven funktionellen Gruppen im Molekül. Beispiele geeigneter isocyanatreaktiver funktioneller Gruppen sind die vorstehend beschriebenen. Das Bindemittel (B) kann darüber hinaus noch mindestens eine, insbesondere mindestens zwei, der vorstehend beschriebenen funktionellen Gruppen mit mindestens einer mit aktinischer Strahlung aktivierbaren Bindung enthalten.

Beispiele für geeignete Bindemittel (B) sind statistisch, alternierend und/oder blockartig aufgebaute lineare und/oder verzweigte und/oder kammartig aufgebaute (Co)Polymerisate von ethylenisch ungesättigten Monomeren, Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Polyurethane, Polylactone, Polycarbonate, Polyether, Epoxidharz-Amin-Addukte, Polyhamstoffe, Polyamide, Polyimide, Polyester-Polyurethane, Polyether-Polyurethane oder Polyester-Polyether-Polyurethane, insbesondere Polyester-Polyurethane.

Von diesen Bindemitteln (B) weisen die (Meth)Acrylatcopolymerisate besondere Vorteile auf und werden deshalb besonders bevorzugt verwendet.

Beispiele geeigneter olefinisch ungesättigter Monomere (b) für die Herstellung der (Meth)Acrylatcopolymerisate (B) sind

### (b1) Monomere, welche mindestens eine Hydroxyl- oder Aminogruppe pro Molekül tragen wie

- Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, - ethacrylat, -crotonat, -maleinat, -fumarat oder -itaconat; oder Hydroxycycloalkylester wie 1,4-Bis(hydroxymethyl)cyclohexan-, Octahydro-4,7-methano-1 H-inden-dimethanol- oder Methylpropandiolmonoacrylat, - monomethacrylat, -monoethacrylat, -monocrotonat, - monomaleinat, -monofumarat oder -monoitaconat; Umsetzungsprodukte aus cyclischen Estern, wie z.B. epsilon-Caprolacton und diesen Hydroxyalkyl- oder - cycloalkylestern;
- olefinisch ungesättigte Alkohole wie Allylalkohol;
- Polyole wie Trimethylolpropanmono- oder diallylether oder Pentaerythritmono-, -di- oder -triallylether;
- Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
- Aminoethylacrylat, Aminoethylmethacrylat, Allylamin oder N-Methyliminoethylacrylat; und/oder
- Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder - cycloalkylestern der (Meth)Acrylsäure und/oder weiterer hydroxylgruppehaltiger Monomere (b1).

### (b2) Monomere, welche mindestens eine Säuregruppe pro Molekül tragen, wie

- Acrylsäure, Methacrylsäure, Ethacrylsäure, Crotonsäure, Maleinsäure, Fumarsäure oder Itaconsäure;
- olefinisch ungesättigte Sulfon- oder Phosphonsäuren oder deren Teilester;
- Maleinsäuremono(meth)acryloyloxyethylester, Bernsteinsäuremono(meth)acryloyloxyethylester oder Phthalsäuremono(meth)acryloyloxyethylester; oder
- Vinylbenzoesäure (alle Isomere), alpha-Methylvinylbenzoesäure (alle Isomere) oder Vinylbenzsolsulfonsäure (alle Isomere).

### (b3) Monomere, die im wesentlichen oder völlig frei von reaktiven funktionellen Gruppen sind, wie:

### Monomere (b31):

Im wesentlichen säuregruppenfreie (Meth)acrylsäureester wie (Meth)Acryisäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethoxytriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate (weitere Beispiele geeigneter Monomere (b31) dieser Art sind aus der Offenlegungsschrift DE 196 25 773 A 1, Spalte 3, Zeile 65, bis Spalte 4, Zeile 20, bekannt). Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1 H-inden-dimethanol- oder Cyclohexan-1,2-, -1,3-oder -1,4-diol-di(meth)acrylat; Trimethylolpropan-di- oder -tri(meth)acrylat; oder Pentaerythrit-di-, -tri- oder -tetra(meth)acrylat enthalten. Rahmen der vorliegenden Erfindung sind hierbei unter untergeordneten Mengen an höherfunktionellen Monomeren (b31) solche Mengen zu verstehen, welche nicht zur Vernetzung oder Gelierung der Copolymerisate führen, es sei denn, sie sollen in der Form von vernetzten Mikrogelteilchen vorliegen.

### Monomere (b32):

Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propyientrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt. Vinylester dieser Art werden unter der Marke VeoVa® vertrieben (vgl. auch Römpp Lexikon Lacke und Druckfarben, Georg Thieme Verlag, Stuttgart, New York, 1998, Seite 598).

### Monomere (b33):

Diarylethylene, insbesondere solche der allgemeinen Formel 1:

**R**^{**1**}**R**^{**2**}**C=CR**^{**3**}**R**^{**4**} (I),

worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl-cyclohexan. Beispiele geeigneter Cycloalkylalkylreste sind 2-, 3- oder 4-Methyl-, -Ethyl-, -Propyl- oder - Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-,3-oder 4-Phenylcyclohex-1-yl. Beispiele geeigneter Arylalkylreste sind 2-, 3-oder 4-Methyl-, -Ethyl-, -Propyl- oder -Butylphen-1-yl. Beispiele geeigneter Arylcycloalkylreste sind 2-, 3- oder 4-Cyclohexylphen-1-yl. Vorzugsweise handelt es sich bei den Arylresten R¹, R², R³ und/oder R⁴ um Phenyl- oder Naphthylreste, insbesondere Phenylreste. Die in den Resten R¹, R², R³ und/oder R⁴ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; und/oder Arylthio-, Alkylthio- und Cycloalkylthioreste. Besonders vorteilhaft sind Diphenylethylen, Dinaphthalinethylen, cis- oder trans- Stilben oder - Vinyliden-bis(4-nitrobenzol), insbesondere Diphenylethylen (DPE), weswegen sie bevorzugt verwendet werden. Im Rahmen der vorliegenden Erfindung werden die Monomeren (b33) eingesetzt, um die Copolymerisation in vorteilhafter Weise derart zu regeln, daß auch eine radikalische Copolymerisation in Batch-Fahrweise möglich ist.

### Monomere (b34):

Vinylaromatische Kohlenwasserstoffe wie Styrol, Vinyltoluol, Diphenylethylen oder alpha-Alkylstyrole, insbesondere alpha-Methylstyrol.

### Monomere (b35):

Nitrile wie Acrylnitril und/oder Methacrylnitril.

### Monomere (b36):

Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam oder N-Vinylpyrrolidon; 1-Vinylimidazol; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.

### Monomere (b37):

Allylverbindungen, insbesondere Allylether und -ester wie Allylmethyl-, -ethyl-, -propyl- oder- butylether oder Allylacetat, -propionat oder -butyrat.

### Monomere (b38):

Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind.

### Monomere (b39):

Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
und/oder

### (b4) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der (Meth)Acrylatcopolymerisate (B) führen, es sei denn, man will gezielt vernetzte polymere Mikroteilchen herstellen.

Beispiele geeigneter Herstellverfahren für (Meth)Acrylatcopolymerisate (B) werden in den europäischen Patentanmeldungen EP 0 767 185 A 1, den deutschen Patenten DE 22 14 650 B 1 oder DE 27 49 576 B 1 und den amerikanischen Patentschriften US 4,091,048 A 1, US 3,781,379 A 1, US 5,480,493 A 1, US 5,475,073 A 1 oder US 5,534,598 A 1 oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Die Einführung von funktionellen Gruppen mit mindestens einer durch aktinische Strahlung aktivierbaren Bindung kann durch polymeranaloge Umsetzung der vorstehend beschriebenen (Meth)Acrytatcopotymerisate (B) mit geeigneten Verbindungen, die durch aktinische Strahlung aktivierbare Bindungen enthalten, erfolgen. Beispielsweise können gegebenenfalls vorhandene seitenständige Glycidylgruppen der (Meth)Acrylatcopolymerisate (B) mit (Meth)Acrylsäure umgesetzt werden.

Der Gehalt des erfindungsgemäßen Einkomponentensystems an den Bindemitteln (B) kann breit variieren und richtet sich in erster Linie nach der Funktionalität der Bindemittel (B) einerseits und der Vernetzungsmittel (A) andererseits. Vorzugsweise liegt der Gehalt, bezogen auf den Festkörper des erfindungsgemäßen Einkomponentensystems, bei 20 bis 90, bevorzugt 25 bis 85, besonders bevorzugt 30 bis 80, ganz besonders bevorzugt 35 bis 75 und insbesondere 40 bis 70 Gew.-%.

Das erfindungsgemäße Einkomponentensystem kann mindestens einen Zusatzstoff (C) enthalten. Die Auswahl richtet sich vor allem nach dem Verwendungszweck des erfindungsgemäßen Einkomponentensystems.

So kann das erfindungsgemäße Einkomponentensystem als Dual-Cure-Klebstoff, Dual-Cure-Dichtungsmasse oder Dual-Cure-Beschichtungsstoff dienen. Des weiteren kann es der Herstellung dieser Produkte dienen. Hierbei können die Dual-Cure-Klebstoffe, -Dichtungsmassen und - Beschichtungsstoffe flüssige lösemittelhaltige Systeme (konventionelle Systeme), flüssige lösemittelfreie Systeme (100%-Systeme) oder lösemittelfreie feste Systeme sein. Im Falle von Beschichtungsstoffen werden die lösemittelfreien festen Systeme auch als Pulverlacke bezeichnet. Diese können auch in Wasser dispergiert sein. Dispersionen dieser Art werden von der Fachwelt auch als Pulverslurry-Lacke bezeichnet. Vorzugsweise werden flüssige lösemittelhaltige, d. h. konventionelle, Dual-Cure-Klebstoffe, -Dichtungsmassen und - Beschichtungsstoffe verwendet. Gegenüber üblichen und bekannten Klebstoffen, Dichtungsmassen und Beschichtungsstoffen haben die erfindungsgemäßen den Vorteil eines signifikant höheren Festkörpergehalts.

Besondere Vorteile weist das erfindungsgemäße Einkomponentensystem bei seiner Verwendung als Dual-Cure-BeschichtungsstofF auf. Dabei kann es sich um einen pigmentierten oder einen nicht pigmentierten Beschichtungsstoff handeln. Beispiele für pigmentierte Beschichtungsstoffe sind Füller, Unidecklacke oder Basislacke; Beispiele für nicht pigmentierte Beschichtungsstoffe sind Klarlacke. Besonders bevorzugt wird das erfindungsgemäße Einkomponentensystem als oder zur Herstellung von Dual-Cure-Klarlacken, insbesondere konventionelle Dual-Cure-Klarlacke, verwendet.

Wird der Dual-Cure-Beschichtungsstoff als Füller, Unidecklack oder Basislack verwendet, enthält er als Zusatzstoffe (C) farb- und/oder effektgebende Pigmente (C) in üblichen und bekannten Mengen. Die Pigmente (C) können aus anorganischen oder organischen Verbindungen bestehen und können effekt- und/oder farbgebend sein. Der erfindungsgemäße Dual-Cure-Beschichtungsstoff gewährleistet daher aufgrund dieser Vielzahl geeigneter Pigmente (C) eine universelle Einsatzbreite der Dual-Cure-Beschichtungsstoffe und ermöglicht die Realisierung einer Vielzahl von Farbtönen und optischer Effekte.

Als Effektpigmente (C) können Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente.« und Seiten 380 und 381 »Metalloxid-Glimmer-Pigmente« bis »Metallpigmente«, verwiesen.

Beispiele für geeignete anorganische farbgebende Pigmente (C) sind Titandioxid, Eisenoxide, Sicotransgelb und Ruß. Beispiele für geeignete organische farbgebende Pigmente (C) sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Desweiteren kann der Dual-Cure-Beschichtungsstoff, insbesondere als Füller, organische und anorganische Füllstoffe (C) in üblichen und bekannten, wirksamen Mengen enthalten. Beispiele für geeignete Füllstoffe (C) sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl. Ergänzend wird auf Römpp Lexikon Lacke und Druckfarben, Georg Thieme Verlag, 1998, Seiten 250 ff., »Füllstoffe«, verwiesen.

Diese Pigmente und Füllstoffe (C) können auch über Pigmentpasten in die Dual-Cure-BeschichtungsstofFe eingearbeitet werden.

Die vorstehend beschriebenen Pigmente und Füllstofffe (C) entfallen, wenn die Dual-Cure-Beschichtungsstoffe in ihrem ganz besonders bevorzugten Verwendungszweck als Klarlacke verwendet werden.

Beispiele geeigneter Zusatzstoffe (C), welche sowohl in den Klarlacken, Füllern, Basisiacken und Unidecktacken vorhanden sein können, sind
- thermisch härtbare Reaktiwerdünner wie stellungsisomere Diethyloctandiole oder Hydroxylgruppen enthaltende hyperverzweigte Verbindungen oder Dendrimere wie sie in den deutschen Patentanmeldungen DE 198 05 421 A 1, DE 198 09 643 A 1 oder DE 198 40 405 A 1 beschrieben werden;
- mit aktinischer Strahlung härtbare Reaktiwerdünner, wie die in Römpp Lexikon Lacke und Druckfarben, Georg Thieme Verlag, Stuttgart, New York, 1998, auf Seite 491 unter dem Stichwort »Reaktiwerdünner« beschriebenen;
- zusätzliche Vernetzungsmittel wie Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP 0 596 460 A 1 beschrieben werden;
- niedrig siedende und/oder hochsiedende organische Lösemittel ("lange Lösemittel");
- UV-Absorber;
- Lichtschutzmittei wie HALS-Verbindungen, Benztriazole oder Oxalanilide;
- Radikalfänger;
- Photoinitiatoren wie solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether; in Gegenwart dieser thremolabüen radikalischen Initiatoren kann der erfindungsgemäße Dual-Cure-Beschichtungsstoff auch rein thermisch gehärtet werden, was ein weiterer besondere Vorteil ist;
- Katalysatoren für die Vernetzung wie Dibutylzinndilaurat, Dibutylzinndioleat, Lithiumdecanoat, Bismutlactat oder - dimethylpropionat oder Zinkoctoat oder starke Säuren wie Sulfonsäuren, die gegebenenfalls mit Aminen blockiert sind;
- Entlüftungsmittel, wie Diazadicycloundecan ;
- Slipadditive;
- Polymerisationsinhibitoren;
- Entschäumer;
- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen, Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen; die Füllstoffe können auch als Nanopartikel vorliegen, wobei sie vorzugsweise in den vorstehend beschriebenen Reaktiverdünnern für die Härtung mit aktinischer Strahlung dispergiert sind;
- Sag control agents wie Harnstoffe, modifizierte Harnstoffe und/oder Kieselsäuren, wie sie beispielsweise in den Literaturstellen EP 192 304 A 1, DE 23 59 923 A 1, DE 18 05 693 A 1, WO 94/22968, DE 27 51 761 C 1, WO 97/12945 oder "farbe + lack", 11/1992, Seiten 829 ff., beschrieben werden;
- rheologiesteuernde Additive, wie die aus den Patentschriften WO 94/22968, EP 0 276 501 A 1, EP 0 249 201 A 1 oder WO 97/12945 bekannten; vernetzte polymere Mikroteilchen; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Mattierungsmittel wie Magnesiumstearat.

Weitere Beispiele geeigneter Zusatzstoffe (C) werden in dem Lehrbuch »Lackadditive« von Johan Bieleman, Wiley-VCH, Weinheim, New York, 1998, beschrieben.

Die vorstehend beschriebenen Zusatzstoffe (C) können auch in den Dual-Cure-Klebstoffen und -Dichtungsmassen vorhanden sein, sofern sie sich für diese Verwendungszwecke eignen, was der Fachmann anhand seines allgemeinen Fachwissens leicht feststeüen kann.

Die Herstellung der erfindungsgemäßen Einkomponentensysteme weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder nach den für die Herstellung der jeweiligen erfindungsgemäßen Dual-Cure-Beschichtungsstoffen, -Klebstoffen oder -Dichtungsmassen geeigneten Verfahren.

Die Dual-Cure-Klebstoffe dienen der Herstellung der erfindungsgemäßen Klebschichten auf grundierten und ungrundierten Substraten.

Die erfindungsgemäßen Dual-Cure-Dichtungsmassen dienen der Herstellung der erfindungsgemäßen Dichtungen auf und/oder in grundierten und ungrundierten Substraten.

Die Dual-Cure-Beschichtungsstoffe dienen der Herstellung ein- oder mehrschichtiger Klarlackierungen und/oder farb- und/oder effektgebender Lackierungen auf grundierten und ungrundierten Substraten. Die erfindungsgemäßen Einkomponentensysteme erweisen sich gerade bei dieser Verwendung als besonders vorteilhaft. Ganz besondere Vorteile resultieren bei ihrer Verwendung zur Herstellung von Klarlackierungen, insbesondere im Rahmen des sogenannten Naß-in-naß-Verfahrens, bei dem ein Basislack, insbesondere ein Wasserbasislack, auf das grundierte oder ungrundierte Substrat appliziert und getrocknet, indes nicht gehärtet wird, wonach man auf die Basislackschicht einen Klarlack appliziert und die resultierende Klarlackschicht gemeinsam mit der Basislackschicht thermisch und mit aktinischer Strahlung härtet.

Als Substrate kommen alle zu lackierenden Oberflächen, die durch eine Härtung der hierauf befindlichen Schichten unter der kombinierten Anwendung von Hitze und aktinischer Strahlung nicht geschädigt werden, in Betracht.

Geeignete Subtrat bestehen aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien.

Demnach sind die erfindungsgemäßen Lackierungen, Klebschichten oder Dichtungen auch für Anwendungen außerhalb der Automobilerstlackierung und der Autoreparaturlackierung geeignet. Hierbei kommen sie insbesondere für die Lackierung, das Verkleben und/oder das Abdichten von Möbeln, Fenstern und Türen, von Bauwerken im Innen- und Außenbereich und für die industrielle Lackierung, inklusive Coil Coating, Container Coating und die Imprägnierung oder Beschichtung elektrotechnischer Bauteile, in Betracht. Im Rahmen der industriellen Lackierung eignen sie sich für die Lackierung, das Verkleben und/oder das Abdichten praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transförmatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation der Dual-Cure-Beschichtungsstoffe, -Klebstoffe und - Dichtungsmassen, insbesondere der Dual-Cure-Beschichtungsstoffe, kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühäuftrag (ESTA), gegebenenfalls verbunden mit Heißspritzapplikation wie zum Beispiel Hot-Air- Heißspritzen. Die Applikationen kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Duai-Cure- Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff selbst, betrieben wird.

Bevorzugt wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Dual-Cure-Beschichtungsstoffs und des Overspray vermieden.

Im allgmeinen werden die Füllerlackschicht, Unidecklackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 15 bis 120, besonders bevorzugt 20 bis 100 und insbesondere 25 bis 90 µm, im Falle der Unidecklackierung liegt sie bei 5 bis 90, vorzugsweise 10 bis 80, besonders bevorzugt 15 bis 60 und insbesondere 20 bis 50 µm, im Falle der Basislackierung liegt sie bei 5 bis 50, vorzugsweise 6 bis 40, besonders bevorzugt 7 bis 30 und insbesondere 8 bis 25 µm, und im Falle der Klarlackierungen liegt sie bei 10 bis 100, vorzugsweise 15 bis 80, besonders bevorzugt 20 bis 70 und insbesondere 25 bis 60 µm.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der applizierten Schichten oder zum Verdunsten von flüchtigen Bestandteilen wie Lösemittel oder Wasser. Die Ruhezeit kann durch die Anwendung erhöhter Temperaturen bis 80°C unterstützt und/oder verkürzt werden, sofern hierbei keine Schädigungen oder Veränderungen der applizierten Schichten eintreten, etwa eine vorzeitige vollständige Vernetzung.

Erfindungsgemäß erfolgt die Aushärtung mit aktinischer Strahlung, insbesondere mit UV-Strahlung, und/oder Elektronenstrahlen. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der applizierten Schichten gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der Härtung mit aktinischer Strahlung kann auch die thermische Härtung stufenweise erfolgen. Vorteilhafterweise erfolgt die thermische Härtung bei einer Temperatur >90 °C, bevorzugt 90 bis 180 °C, besonders bevorzugt 110 bis 160°C und insbesondere 120 bis 150 °C während einer Zeit von 1 min bis zu 2 h, besonders bevorzugt 2 min bis zu 1 h und insbesondere 3 min bis 30 min.

Thermische Härtung und Härtung mit aktinischer Strahlung können gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist aufgrund seines allgemeinen Fachwissens gegebenenfalls unter Zuhilfenahme einfacher Vorversuche ermitteln.

Die aus den erfindungsgemäßen Dual-Cure-Klebstoffen und -Dichtungsmassen hergestellten erfindungsgemäßen Klebschichten und Dichtungen haben auch unter extremen und/oder rasch wechselnden klimatischen Bedingungen eine hervorragende Klebkraft und Dichtungsfähigkeit auch über lange Zeiträume hinweg.

Die aus den erfindungsgemäßen Dual-Cure-Beschichtungsstoffen hergestellten erfindungsgemäßen Beschichtungen weisen einen hervorragenden Verlauf und einen hervorragenden optischen Gesamteindruck auf. Sie sind witterungsstabil und vergilben auch im tropischen Klima nicht. Sie sind daher im Innen- und Außenbereich verwendbar.

Die mit Hilfe der Dual-Cure-Beschichtungsstoffe hergestellten farb- und/oder effektgebenden Mehrschichtlackierungen sind, was Farbe, Effekt, Glanz und D.O.I. (distinctiveness of the reflected image) betrifft, von höchster optischer Qualität, haben eine glatte, strukturfreie, harte, flexible und kratzfeste Oberfläche, sind witterungs-, chemikalien- und etchbeständig, sie vergilben nicht und zeigen keine Rißbildung und Delamination der Schichten.

Daher weisen auch die erfindungsgemäßen grundierten und ungrundierten Substrate, insbesondere Karosserien von Automobilen und Nutzfahrzeugen, industrielle Bauteile, inklusive Kunstsstoffteile, Emballagen, Coils und elektrische Bauteile, oder Möbel, die mit mindestens einer erfindungsgemäßen Beschichtung beschichtet, mindestens einer erfindungsgemäßen Dichtung abgedichtet und/oder mit mindestens einem erfindungsgemäßen Klebstoff verklebt sind, besondere technische und wirtschaftliche Vorteile, insbesondere eine lange Gebrauchsdauer auf, was sie für die Anwender besonders attraktiv macht.

### Beispiele

### Herstellbeispiel 1

### Die Herstellung eines Bindemittels (B)

In einen Laborreaktor mit einem Nutzvolumen von 4 I, der mit einem Rührer, einem Tropftrichter für den Monomerzulauf und einem Tropftrichter für den Initiatorzulauf, Stickstoffeinleitungsrohr, Thermometer und Rückflußkühler ausgestattete war, wurden 650 Gewichtsteile einer Fraktion aromatischer Kohlenwasserstoffe mit einem Siedebereich von 158 bis 172°C vorgelegt. Das Lösemittel wurde auf 140°C aufgeheizt, wonach bei dieser Temperatur unter Rühren eine Monomermischung aus 652 Gewichtsteilen Ethylhexylacrylat, 383 Gewichtsteilen Hydroxyethylmethacrylat, 143 Gewichtsteilen Styrol, 213 Gewichtsteilen 4-Hydroxybutylacrylat und 49 Gewichtsteilen Acrylsäure während vier Stunden und eine Initiatorlösung aus 113 Gewichtsteilen tert.-Butylperethylhexanoat und 113 Gewichtsteilen des aromatischen Lösemittels während viereinhalb Stunden gleichmäßig zudosiert wurden. Mit den Zuläufen wurde gleichzeitig begonnen. Nach der Beendigung des Initiatorzulaufs wurde die Redaktionsmischung während zwei Stunden bei 140°C gehalten und danach abgekühlt. Die Reaktionsmischung wurde mit einer Mischung aus 1-Methoxypropylacetat-2, Butylglykolacetat und Butylacetat verdünnt. Die resultierende Bindemittellösung wies einen Festkörpergehalt von 65 Gew.-% auf (1 h / 130°C).

### Herstellbeispiel 2

### Die Herstellung eines erfindungsgemäß zu verwendenden Vernetzungsmittels (A)

1.538 Gewichtsteile eines handelsüblichen acrylat- und isocyanatfunktionellen Poiyisocyanats (Roskydal® UA VPLS 2337 der Firma Bayer AG) wurden in 838 Gewichtsteilen einer Fraktion aromatischer Kohlenwasserstoffe mit einem Siedebereich von 158 bis 172°C gelöst. Die Lösung wurde in einen Reaktor, ausgestattet mit Rührer, Rückflußkühler und Ölheizung, eingewogen und auf 60°C aufgeheizt. Über eine Feststoffsdosiereinrichtung wurden 418 Gewichtsteile Dimethylpyrazol in drei Portionen zugegeben, wobei mit jeder Zugabe eine exotherme Reaktion eintrat. Nach jeder der Zugaben wurde zunächst das Abklingen der Exothermie abgewartet, bevor die nächste Zugabe erfolgte. Der Gehalt an freien Isocyanatgruppen wurde stündlich bestimmt. Bei einem Isocyanatgehalt < 0,01 % wurde die Lösung auf Raumtemperatur abgekühlt und filtriert. Die Lösung hatte einen Festkörpergehalt von 70 Gew.-%.

### Beispiel 1

### Die Herstellung eines erfindungsgemäßen Dual-Cure-Klarlacks

Der erfindungsgemäßen Dual-Cure-Klarlack wurde durch Vermischen von 41,3 Gewichtsteilen der Bindemittellösung des Herstellbeispiels 1, 39,2 Gewichtsteilen der Vernetzungsmittelslösung des Herstellbeispiels 2, 0,65 Gewichtsteilen eines substituierten Hydroxyphenyltriazins (65%-ig in Toluol), 0,58 Gewichtsteilen N-Aminoether-2,2,6,6-tetramethylpiperidinylester (Tinuvin® 123 der Firma Ciba Specialty Chemicals), 0,25 Gewichtsteilen Lucirin® TPO (Photoinitiator der Firma BASF Aktiengesellschaft), 2,4 Gewichtsteilen Genocure® MBF (Photoinitiator der Firma Rahn), 11 Gewichtsteilen Solventnaphtha, 4 Gewichtsteilen Butyldiglykolacetat und 0,1 Gewichtsteilen Dow Corning Pa 57 (Additiv der Firma Dow Corning GmbH) hergestellt.

Der Klarlack wurde für die Applikation mit einer Mischung aus Solventnaphtha und Butyldiglykolacetat im Volumenverhältnis von 1 : 1 auf eine Viskosität von 30 Sekunden im DIN4-Auslaufbecher eingestellt.

### Beispiel 2

### Die Herstellung einer erfindungsgemäßen Mehrschichtlackierung

Zur Herstellung der Mehrschichtlackierung wurden Prüftafeln aus Stahl, die mit einer Elektrotauchlackierung einer Trockenschichtdicke von 18 bis 22 µm beschichtet waren, mit einem Wasserfüller beschichtet. Die resultierende Wasserfüllerschicht wurde während 20 Minuten bei 160°C eingebrannt, so daß eine Füllerlackierung einer Trockenschichtdicke von 35 bis 40 µm resultierte. Die Füllerlackierung wurde anschließend mit einem schwarzen Wasserbasislack in einer Schichtdicke von 12 bis 15 µm beschichtet, und die resultierende Wasserbasislackschichten wurde während 10 Minuten bei 80°C abgelüftet. Hiernach wurde der Klarlack des Beispiels 1 in einer Schichtdicke von 40 bis 45 µm in einem Kreuzgang mit einer Fließbecherpistole pneumatische appliziert. Anschließend wurde die Klarlackschicht während 10 Minuten bei Raumtemperatur und 10 Minuten bei 50°C abgelüftet. Die abgelüftete Klarlackschicht wurde zunächst mit UV-Strahlung gehärtet (Dosis: 1.500 mJ/cm²; Bandgeschwindigkeit 4 m/min). Anschließend wurden die Wasserbasislackschicht und die Klarlackschicht während 30 Minuten bei 150°C in einem Umluftofen thermisch gehärtet.

Die erfindungsgemäße Mehrschichtlackierung wies einen Glanz nach DIN 67530 von 89,2 und eine Mikroeindringhärte von 86,5 N/mm² (Universalhärte bei 25,6 mN, Fischersope 100 V mit Diamantpyramide nach Vickers).

Die Kratzfestigkeit der Mehrschichtlackierung wurden nach dem Sandtest bestimmt. Hierzu wurde die Lackoberfläche mit Sand belastet (20g Quarz-Siibersand 1,5-2,0 mm). Der Sand wurde in einen Becher (Boden plan abgeschnitten) gegeben, der fest auf der Prüftafel befestigt wurde. Mittels eines Motorantriebes wurde die Tafel mit dem Becher und dem Sand in Schüttelbewegungen versetzt. Die Bewegung des losen Sandes verursachte dabei die Beschädigung der Lackoberfläche (100 Doppelhübe in 20 s). Nach der Sandbelastung wurde die Prüffläche vom Abrieb gereinigt, unter einem kalten Wasserstrahl vorsichtig abgewischt und anschließend mit Druckluft getrocknet. Gemessen wurde der Glanz nach DIN 67530 vor und nach Beschädigung (Meßrichtung senkrecht zur Kratzrichtung):

| | |
|---|---|
| Anfang: | 89,2 |
| nach Schädigung: | 74,8 |
| 2h bei 60°C: | 84,4 |

Außerdem wurde die Kratzfestigkeit noch nach dem Bürstentest bestimmt. Für diesen Test wurden die Prüftafeln mit der Mehrschichtlackierung mindestens 2 Wochen bei Raumtemperatur gelagert, bevor die Prüfung durchgeführt wurde.

Die Kratzfestigkeit wurde mit Hilfe des in Fig. 2 auf Seite 28 des Artikels von P. Betz und A. Bartelt, Progress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Der Prüfkörper war mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrug 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült, und die Prüftafel wurden mit Druckluft trockengeblasen. Gemessen wurde der Glanz nach DIN 67530 vor und nach Beschädigung (Meßrichtung senkrecht zur Kratzrichtung):

| | |
|---|---|
| Anfang: | 89,2 |
| nach Schädigung: | 79,1 |
| 2h bei 60°C: | 87,7 |

Die Chemikalienfestigkeit wurde mit Hilfe des in der Fachwelt bekannten MB-Gradientenofentests bestimmt. Hierbei zeigten 1 %ige Schwefelsäure bei 50°C, Pankreatin bei 44°C und deionisiertes Wasser erst über 75°C eine erste Markierung.

Die Versuchsergebnisse belegen die hervorragenden optischen Eigenschaften, die hohe Kratzfestigkeit und hohe Chemikalienbeständigkeit der Mehrschichtlackierung.

### Beispiel 3

### Die Herstellung einer erfindungsgemäßen Klarlackierung

Zur Herstellung der Klarlackierung wurde der Klarlack des Beispiels 1 mit Hilfe einer 100 µm Kastenrakel auf Glasplatten aufgetragen und wie folgt ausgehärtet:

### Verfahren 1:

Ablüftung: 10 min bei Raumtemperatur, 10 min bei 50°C
Härtung mit UV- Strahlung: Dosis: 1.500 mJ/cm²; Bandgeschwindigkeit 4 m/min
thermische Härtung: 30 min bei 150°C

### Verfahren 2:

Ablüftung: 10 min bei Raumtemperatur, 10 min bei 50°C
thermische Härtung: 30 min bei 150°C
Härtung mit UV- Strahlung: Dosis: 1.500 mJ/cm²; Bandgeschwindigkeit 4 m/min

Die resultierenden Klarlackierungen wurden gegen einen Standard (unlackierte Glasplatte vor weißem Hintergrund) nach der Cielab-Methode farbmetrisch vermessen. Parallel dazu wurde die Pendelhärte nach König bestimmt. Die Ergebnisse finden sich in der Tabelle. '

**Tabelle: Farbmetrische Daten und Pendelhärte**

| **Verfahren König** | **ΔE** | **L*** | **a*** | **b*** | **Pendelhärte - nach (s)** |
|---|---|---|---|---|---|
| 1 | 4,94 | 92,91 | -2,55 | 5,96 | 126 |
| 2 | 1,31 | 93,56 | -2,08 | 2,24 | 161 |

Die Ergebnisse belegen, daß die nachträgliche Härtung mit aktinischem Licht zu härteren und weniger gelb- und grünstichigen Klarlackierungen führt.

## Patentansprüche

1. Thermisch und mit aktinischer Strahlung härtbares Einkomponentensystem, enthaltend
(A) mindestens ein Vernetzungsmittel, enthaltend im statistischen Mittel mindestens eine blockierte lsocyanatgruppe und mindestens eine funktionelle Gruppe mit mindestens einer mit aktinischer Strahlung aktivierbaren Bindung im Molekül, und
(B) mindestens ein Bindemittel mit im statistischen Mittel mindestens einer isocyanatreaktiven funktionellen Gruppe im Molekül.

2. Einkomponentensystem nach Anspruch 1, **dadurch gekennzeichnet, daß** das Bindemittel (B) im statistischen Mittel noch mindestens eine funktionelle Gruppe mit mindestens einer mit aktinischer Strahlung aktivierbaren Bindung im Molekül enthält.

3. Einkomponentensystem nach Anspruch 1 oder 2, **dadurch gekennzeichnet, daß** das Vernetzungsmittel (A) herstellbar ist, indem man ein Polyisocyanat mit einer Funktionalität von mindestens 2,0 mit
- mindestens einer Verbindung mit mindestens einer isocyanatreaktiven funktionellen Gruppe und mindestens einer mit aktinischer Strahlung aktivierbaren Bindung und
- mindestens einem Blockierungsmittel für Isocyanatgruppen
umsetzt.

4. Einkomponentensystem nach einem der Ansprüche 1 bis 3, **dadurch gekennzeichnet, daß** das Polyisocyanat lsocyanurat-, Biuret-, Allophanat-, Iminooxadiazindion-, Urethan-, Harnstoff-, Carbodiimid- und/oder Uretdiongruppen aufweist.

5. Einkomponentensystem nach einem der Ansprüche 1 bis 4, **dadurch gekennzeichnet, daß** als isocyanatreaktive funktionelle Gruppen Thiol-, Hydroxyl- und/oder primäre und/oder sekundäre Aminogruppen verwendet werden.

6. Einkomponentensystem nach einem der Ansprüche 1 bis 5, **dadurch gekennzeichnet, daß** als mit aktinischer Strahlung aktivierbare Bindungen Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen verwendet werden.

7. Einkomponentensystem nach einem der Ansprüche 1 bis 6, **dadurch gekennzeichnet, daß** Kohlenstoff-Kohlenstoff-Doppelbindungen verwendet werden.

8. Einkomponentensystem nach einem der Ansprüche 1 bis 7, **dadurch gekennzeichnet, daß** die Doppelbindungen als (Meth)Acrylat-, Ethacrylat-, Crotonat-, Cinnamat-, Vinylether-, Vinylester-, Dicyclopentadienyl-, Norbornenyl-, Isoprenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, isoprenyl-, Isopropenyl-, Allyl- oder Butenylestergruppen vorliegen.

9. Einkomponentensystem nach einem der Ansprüche 1 bis 8, **dadurch gekennzeichnet, daß** man als Blockierungsmittel
i) Phenole wie Phenol, Cresol, Xylenol, Nitrophenol, Chlorophenol, Ethylphenol, tert.-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Düsobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazol oder Triazole; sowie
xvii) Gemische dieser Blockierungsmittel,
verwendet.

10. Einkomponentensystem nach Anspruch 9, **dadurch gekennzeichnet, daß** man als Gemische (xvii) Dimethylpyrazol und Triazole, Malonester und Acetessigsäureester oder Dimethylpyrazol und Succinimid verwendet.

11. Einkomponentensystem nach einem der Ansprüche 1 bis 10, **dadurch gekennzeichnet, daß** es als Pulverslurry-Lack vorliegt.

12. Verwendung des Einkomponentensystems gemäß einem der Ansprüche 1 bis 11 als Beschichtungsstoff, Klebstoff und Dichtungsmasse.

13. Verwendung nach Anspruch 12, **dadurch gekennzeichnet, daß** es sich bei dem Beschichtungsstoff um einen pigmentierten oder einen nicht pigmentierten Beschichtungsstoff handelt.

14. Verwendung nach Anspruch 12 oder 13, **dadurch gekennzeichnet, daß** es sich bei dem Beschichtungsstoff um einen Füller, Basislack oder Unidecklack oder um einen Klarlack handelt.

15. Verwendung nach einem der Ansprüche 12 bis 14, **dadurch gekennzeichnet, daß** der Beschichtungsstoff der Automobilserienlackierung, der Automobilreparaturlackierung, der Lackierung von Möbeln, Türen und Fenstern, der Lackierung von Bauwerken im Innen- und Außenbereich sowie der industriellen Lackierung, inklusive Container Coating, Coil Coating und der Beschichtung und/oder Imprägnierung von elektrotechnischen Bauteilen, dient.

## Claims

1. One-component system curable with both heat and actinic radiation, comprising
(A) at least one crosslinking agent whose molecule contains on average at least one blocked isocyanate group and at least one functional group having at least one bond which may be activated with actinic radiation, and
(B) at least one binder whose molecule contains on average at least one isocyanate-reactive functional group.

2. One-component system according to Claim 1, **characterized in that** the binder (B) contains on average per molecule further at least one functional group having at least one bond which may be activated with actinic radiation.

3. One-component system according to Claim 1 or 2, **characterized in that** the crosslinking agent (A) is preparable by reacting a polyisocyanate having a functionality of at least 2.0 with
- at least one compound containing at least one isocyanate-reactive functional group and at least one bond which may be activated with actinic radiation, and
- at least one blocking agent for isocyanate groups.

4. One-component system according to any of Claims 1 to 3, **characterized in that** the polyisocyanate contains isocyanurate, biuret, allophanate, iminooxadiazinedione, urethane, urea, carbodiimide and/or uretdione groups.

5. One-component system according to any of Claims 1 to 4, **characterized in that** said isocyanate-reactive functional groups are thiol, hydroxyl and/or primary and/or secondary amino groups.

6. One-component system according to any of Claims 1 to 5, **characterized in that** carbon-hydrogen single bonds or carbon-carbon, carbon-oxygen, carbon-nitrogen, carbon-phosphorus or carbon-silicon single bonds or double bonds are used as bonds which may be activated with actinic radiation.

7. One-component system according to any of Claims 1 to 6, **characterized in that** carbon-carbon double bonds are used.

8. One-component system according to any of Claims 1 to 7, **characterized in that** the double bonds are present as (meth)acrylate, ethacrylate, crotonate, cinnamate, vinyl ether, vinyl ester, dicyclopentadienyl, norbornenyl, isoprenyl, isopropenyl, allyl or butenyl groups; dicyclopentadienyl ether, norbornenyl ether, isoprenyl ether, isopropenyl ether, allyl ether or butenyl ether groups; dicyclopentadienyl ester, norbornenyl ester, isoprenyl ester, isopropenyl ester, allyl ester or butenyl ester groups.

9. One-component system according to any of Claims 1 to 8, **characterized in that** blocking agents used comprise
i) phenols such as phenol, cresol, xylenol, nitrophenol, chlorophenol, ethylphenol, tertbutylphenol, hydroxybenzoic acid, esters of this acid, or 2,5-di-tert-butyl-4-hydroxytoluene;
ii) lactams, such as ε-caprolactam, δ-valerolactam, γ-butyrolactam or β-propiolactam;
iii) active methylenic compounds, such as diethyl malonate, dimethyl malonate, ethyl or methyl acetoacetate, or acetylacetone;
iv) alcohols such as methanol, ethanol, n-propanol, isopropanol, n-butanol, isobutanol, t-butanol, n-amyl alcohol, t-amyl alcohol, lauryl alcohol, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, methoxymethanol, glycolic acid, glycolic esters, lactic acid, lactic esters, methylolurea, methylolmelamine, diacetone alcohol, ethylenechlorohydrin, ethylenebromohydrin, 1,3-dichloro-2-propanol, 1,4-cyclohexyldimethanol or acetocyanohydrin;
v) mercaptans such as butyl mercaptan, hexyl mercaptan, t-butyl mercaptan, t-dodecyl mercaptan, 2-mercaptobenzothiazole, thiophenol, methylthiophenol or ethylthiophenol;
vi) acid amides such as acetoanilide, acetoanisidinamide, acrylamide, methacrylamide, acetamide, stearamide or benzamide;
vii) imides such as succinimide, phthalimide or maleimide;
viii)amines such as diphenylamine, phenylnapthylamine, xylidine, N-phenylxylidine, carbazole, aniline, napthylamine, butylamine, dibutylamine or butylphenylamine;
ix) imidazoles such as imidazole or 2-ethylimidazole;
x) ureas such as urea, thiourea, ethyleneurea, ethylenethiourea or 1,3-diphenylurea;
xi) carbamates such as phenyl N-phenylcarbamate or 2-oxazolidone;
xii) imines such as ethyleneimine;
xiii)oximes such as acetone oxime, formaldoxime, acetaldoxime, acetoxime, methyl ethyl ketoxime, diisobutylketoxime, diacetylmonoxime, benzophenone oxime or chlorohexanone oximes;
xiv) salts of sulphurous acid such as sodium bisulphite or potassium bisulphite;
xv) hydroxamic esters such as benzyl methacrylohydroxamate (BMH) or allyl methacrylohydroxamate; or
xvi) substituted pyrazoles, especially dimethylpyrazole, or triazoles; and
xvii) mixtures of these blocking agents.

10. One-component system according to Claim 9, **characterized in that** said mixtures (xvii) comprise dimethylpyrazole and triazoles, malonic esters and acetoacetic esters, or dimethylpyrazole and succinimide.

11. One-component system according to any of Claims 1 to 10, **characterized in that** it is present as a powder slurry coating.

12. Use of the one-component system according to any of Claims 1 to 11 as a coating material, adhesive, or sealing compound.

13. Use according to Claim 12, **characterized in that** said coating material is a pigmented or unpigmented coating material.

14. Use according to Claim 12 or 13, **characterized in that** said coating material is a surfacer, basecoat or solid-color topcoat or is a clearcoat.

15. Use according to any of Claims 12 to 14, **characterized in that** the coating material is employed in automotive OEM finishing, in automotive refinishing, in the coating of doors, windows or furniture, in the coating of interior or exterior constructions, or in industrial coating, including container coating, coil coating and the coating and/or impregnation of electrical components.

## Revendications

1. Système monocomposant durcissable thermiquement et par rayonnement actinique contenant :
(A) au moins un agent réticulant contenant en moyenne statistique au moins un groupe isocyanate bloqué et au moins un groupe fonctionnel avec au moins une liaison dans la molécule activable par rayonnement actinique et
(B) au moins un agent liant avec, en moyenne statistique, au moins un groupe fonctionnel réactif aux isocyanates dans la molécule.

2. Système monocomposant selon la revendication 1, **caractérisé en ce que** l'agent liant (B) contient en moyenne statistique encore au moins un groupe fonctionnel avec au moins une liaison dans la molécule activable par rayonnement actinique.

3. Système monocomposant selon la revendication 1 ou 2, **caractérisé en ce que** l'agent réticulant (A) peut être préparé en mettant en réaction un polyisocyanate avec une fonctionnalité d'au moins 2,0 avec
- au moins un composé ayant au moins un groupe fonctionnel réactif aux isocyanates et au moins une liaison activable par rayonnement actinique et
- au moins un agent bloquant pour des groupes isocyanate.

4. Système monocomposant selon l'une des revendications 1 à 3, **caractérisé en ce que** le polyisocyanate présente des groupes isocyanurate, biuret, allophanate, iminooxadiazinedione, uréthane, urée, carbodiimide et/ou uretdione.

5. Système monocomposant selon l'une des revendications 1 à 4, **caractérisé en ce que** des groupes thiole, hydroxyle et/ou amino primaires et/ou secondaires sont utilisés comme groupes fonctionnels réactifs aux isocyanates.

6. Système monocomposant selon l'une des revendications 1 à 5, **caractérisé en ce que** les liaisons activables par rayonnement actinique utilisées sont des simples liaisons carbone-hydrogène ou des simples ou doubles liaisons carbone-carbone, carbone-oxygène, carbone-azote, carbone-phosphore ou carbone-silicium.

7. Système monocomposant selon l'une des revendications 1 à 6, **caractérisé en ce que** des doubles liaisons carbone-carbone sont utilisées.

8. Système monocomposant selon l'une des revendications 1 à 7, **caractérisé en ce que** les doubles liaisons sont présentes comme des groupes (méth)acrylate, éthacrylate, crotonate, cinnamate, vinyléther, vinylester, dicyclopentadiényle, norbornényle, isoprényle, isopropényle, allyle ou butényle; des groupes dicyclopentadiényl-, norbornényl-, isoprényl-, isopropényl-, allyl- ou butényléther ou des groupes dicyclopentadiényl-, norbornényl-, isoprényl-, isopropényl-, allyl- ou buténylester.

9. Système monocomposant selon l'une des revendications 1 à 8, **caractérisé en ce que** l'on utilise comme agent bloquant
i) des phénols comme le phénol, le crésol, le xylénol, le nitrophénol, le chlorophénol, l'éthylphénol, le tert.-butylphénol, l'acide hydroxybenzoïque, les esters de ces acides ou le 2,5-di-tert.-butyl-4-hydroxytoluène;
ii) des lactames comme l'ε-caprolactame, le δ-valérolactame, le γ-butyrolactame ou le β-propiolactame;
iii) des composés méthyléniques actifs comme le diéthylmalonate, le diméthylmalonate, l'éthylester ou le méthylester d'acide acétacétique ou l'acétylacétone;
iv) des alcools comme le méthanol, l'éthanol, le n-propanol, l'isopropanol, le n-butanol, l'isobutanol, le t-butanol, l'alcool n-amylique, l'alcool t-amylique, l'alcool laurylique, le monométhyléther d'éthylèneglycol, le monoéthyléther d'éthylèneglycol, le monobutyléther d'éthylèneglycol, le monométhyléther de diéthylèneglycol, le monoéthyléther de diéthylèneglycol, le monométhyléther de propylèneglycol, le méthoxyméthanol, l'acide glycolique, l'ester d'acide glycolique, l'acide lactique, l'ester d'acide lactique, la méthylolurée, la méthylolmélamine, l'alcool de diacétone, la chlorhydrine d'éthylène, la bromhydrine d'éthylène, le 1,3-dichloro-2-propanol, le 1,4-cyclohexyldiméthanol ou l'acétocyanhydrine;
v) les mercaptans comme le butylmercaptan, l'hexylmercaptan, le t-butylmercaptan, le t-dodécylmercaptan, le 2-mercaptobenzothiazole, le thiophénol, le méthylthiophénol ou l'éthylthiophénol;
vi) les amides acides comme l'acétoanilide, l'acétoanisidinamide, l'acrylamide, le méthacrylamide, l'amide d'acide acétique, l'amide d'acide stéarique ou le benzamide;
vii) les imides comme le succinimide, le phthalimide ou le maléimide;
viii) les amines comme la diphénylamine, la phénylnaphthylamine, la xylidine, la N-phénylxylidine, le carbazole, l'aniline, la naphthylamine, la butylamine, la dibutylamine ou la butylphénylamine;
ix) les imidazoles comme l'imidazole ou le 2-éthylimidazole;
x) les urées comme l'urée, la thiourée, l'éthylèneurée, l'éthylènethiourée ou la 1,3-diphénylurée;
xi) les carbamates comme le phénylester d'acide N-phénylcarbamide ou le 2-oxazolidone;
xii) les imines comme l'éthylèneimine;
xiii) les oximes comme l'acétonoxime, le formaldoxime, l'acétaldoxime, l'acétoxime, le méthyléthylcétoxime, le diisobutylcétoxime, le diacétylmonoxime, le benzophénonoxime ou les chlorohexanonoximes;
xiv) les sels de l'acide sulfureux comme le bisulfite de sodium ou le bisulfite de potassium;
xv) les esters d'acide hydroxamique comme l'hydroxamate benzylméthacrylique (BMH) ou l'hydroxamate allylméthacrylique ou
xvi) les pyrazoles substitués, en particulier le diméthylpyrazole ou les triazoles; ainsi que
xvii) des mélanges de ces agents bloquants.

10. Système monocomposant selon la revendication 9, **caractérisé en ce que** l'on utilise des mélanges (xvii) du diméthylpyrazole et de triazoles, d'ester malonique et d'ester d'acide acétacétique ou de diméthylpyrazole et de succinimide.

11. Système monocomposant selon l'une des revendications 1 à 10, **caractérisé en ce qu'**il est présent sous la forme d'un vernis de "pulverslurry".

12. Utilisation du système monocomposant selon l'une des revendications 1 à 11 comme substance de revêtement, adhésif et masse d'étanchéité.

13. Utilisation selon la revendication 12, **caractérisée en ce que** la matière de revêtement est une matière de revêtement pigmentée ou non pigmentée.

14. Utilisation selon la revendication 12 ou 13, **caractérisée en ce que** la matière de revêtement est une charge, un vernis de base ou un vernis de finition uni ou un vernis transparent.

15. Utilisation selon l'une des revendications 12 à 14, **caractérisée en ce que** la substance de revêtement sert au domaine du vernis industriel pour automobiles, du vernis de réparation pour automobiles, du laquage de meubles, de portes et fenêtres, du laquage de constructions intérieures et extérieures ainsi qu'au laquage industriel, y compris le Container Coating, le Coil Coating et le revêtement et/ou l'imprégnation de pièces électrotechniques.
